# EUROPÄISCHE PATENTSCHRIFT

(11) **EP 2 635 878 B1**
(45) Veröffentlichungstag und Bekanntmachung des Hinweises auf die Patenterteilung: **10.12.2014**
(21) Anmeldenummer: 11794634.3
(22) Anmeldetag: 04.11.2011
(51) Int. Cl.: G01D 5/241

(54) **KAPAZITIVER DREHSENSOR**
CAPACITIVE ROTARY SENSOR
DÉTECTEUR DE ROTATION CAPACITIF

(30) Priorität: 05.11.2010 DE 102010050608
(43) Veröffentlichungstag der Anmeldung: 11.09.2013
(73) Patentinhaber: Hengstler GmbH, 78554 Aldingen (DE)
(72) Erfinder: BÜCHER, Johann, 78554 Aldingen (DE); WÖHRSTEIN, Andreas, 78554 Aldingen (DE)
(74) Vertreter: Riebling, Peter
(86) Internationale Anmeldenummer: PCT/EP2011/005565
(87) Internationale Veröffentlichungsnummer: WO 2012/059237

(56) Entgegenhaltungen:
- EP-A2- 2 159 547
- US-A1- 2003 093 907

## Beschreibung

Die Erfindung betrifft einen kapazitiven Drehsensor nach dem Oberbegriff des Patentanspruches 1.

Mit dem Gegenstand der WO 02/31432 A2 oder US 2004/0252032 A1 ist ein kapazitiver Drehsensor bekannt geworden, bei der zwischen dem Stator und dem exzentrischen Rotorbelag ein kapazitives Feld erzeugt wird, welches sich bei Drehung der Rotorscheibe verändert. Mit dieser Technik ist allgemein ein kapazitiver Sensor bekannt geworden.

Nachteil des bekannten Drehsensors ist jedoch, dass eine Mehrfachumdrehung dieses Drehsensors nicht erfasst werden kann.

Zwar ist es bekannt, eine Mehrfachdrehung eines Drehsensors durch einen sog. Wigand-Sensor zu erfassen. Dieser besteht im Wesentlichen aus einem Impulsgeber, der aus einer Induktionsspule besteht, an welcher Permanentmagnete vorbeilaufen und entsprechende Spannungen in der Spule induzieren.

Auf diese Weise kann beim Vorbeilaufen von Permanentmagneten an einen solchen Impulsgeber die Anzahl der Umdrehungen der Rotorscheibe erfasst werden. Bisher ist es jedoch nicht bekannt, eine solche Multiturn-Technik bei kapazitiven Drehsensoren anzuwenden. Es ist bisher lediglich bekannt, eine solche Multiturn-Einrichtung bei optischen Drehsensoren anzuwenden. Dies hat jedoch den Nachteil, dass die Bauhöhe eines solchen Drehsensors stark vergrößert wird, denn es ist nicht möglich, auf der Leiterplatte eines solchen optischen Drehsensors den Impulsgeber anzuordnen, der für die Auswertung der Multiturn-Signale vorgesehen ist.

Es müssen daher eigene Auswerteeinrichtungen an einem solchen optischen Drehsensor angeordnet werden, was die Bauhöhe in unerwünschter Weise vergrößert.

Weiterer Nachteil ist, dass es nicht ohne weiteres möglich ist, die Auswertung des Multiturn-Sensors mit der optischen Auswertung zu kombinieren.

Demgemäß liegt der vorliegenden Erfindung die Aufgabe zu Grunde, einen kapazitiven Drehsensor der Eingangs genannten Art mit einer Multiturn-Einrichtung auszurüsten.

Zur Lösung der gestellten Aufgabe ist die Erfindung durch die Merkmale des unabhängigen Patentanspruches 1 gekennzeichnet, wobei vorteilhafte Weiterbildungen Gegenstand der abhängigen Patentansprüche sind.

Mit der gegebenen technischen Lehre ergibt sich der wesentliche Vorteil, dass nun in einem kapazitiven Drehsensor gleichzeitig auch eine magnetisch wirkende Einrichtung als Multiturn-Auswerteeinrichtung angeordnet werden kann. Dies erfolgt auf engstem Bauraum, weil die Funktionsteile des kapazitiven Drehsensors gleichzeitig für die Einrichtung und für die Anordnung des Multiturn-Sensors verwendet werden.

In einer grundlegenden Ausgestaltung der vorliegenden Erfindung ist es vorgesehen, dass drehfest mit der Welle des Drehsensors eine Scheibe verbunden ist, auf der die Magneten angeordnet sind und dass ortsfest auf einer Leiterplatte der Impulsgeber dem Magneten zugeordnet ist.

In einer ersten Ausgestaltung der vorliegenden Erfindung ist es vorgesehen, dass drehfest mit der Welle, welche den Rotor für die kapazitive Auswertung der Lage trägt, ein Polrad verbunden ist, an dem die Magnete angeordnet sind, die an einem auf der Leiterplatte des Drehsensors angeordneten Impulsgeber vorbei laufen.

Damit wird eine geringe Bauhöhe beansprucht, weil die Leiterplatte für die Auswertung des kapazitiven Drehsensors gleichzeitig für die Kontaktierung eines dort angeordneten Impulsgebers verwendet wird.

In einer zweiten Ausführung der vorliegenden Erfindung wird eine noch geringere Bauhöhe dadurch erreicht, dass auf dem Rotor, welcher den exzentrischen Rotorbelag für den kapazitiven Drehsensor trägt, gleichzeitig auch ein oder mehrere Magnete angeordnet sind, welche wiederum auf einem zentrisch und drehfest angeordneten Impulsgeber vorbeilaufen.

In einer dritten Ausführungsform wird - gem. der zweiten Ausführungsformvorgesehen, dass ebenfalls die Permanentmagnete auf dem drehfest mit der Welle befestigten Rotor angeordnet sind und hierbei aber der Impulsgeber radial zur Mitte versetzt nach außen angeordnet ist, so dass über diesen die Permanentmagnete vorbeilaufen.

Hierbei ist von besonderem Interesse, dass die Permanentmagnete von dem exzentrischen Rotorbelag abgedeckt sind, die Rotorscheibe mit dem leitfähigen exzentrischen Belag dient also als Abschirmeinrichtung für das Magnetfeld der Permanentmagnete, so dass dafür gesorgt wird, dass dieses Magnetfeld nur in Richtung auf den darüber angeordneten Impulsgeber eingeleitet wird, nicht jedoch auf die Auswerteeinrichtung auf der Statorseite (und die dort angeordnete Leiterplatte) einwirkt.

Damit wird die Auswerteschaltung von magnetischen Feldlinien der Permanentmagneten durch den leitfähigen Belag der Rotorscheibe abgedeckt und es erfolgt damit eine präzisere Messung.

Dieser Vorteil gilt auch für das zweite Ausführungsbeispiel. Weil beim zweiten Ausführungsbeispiel die Rotorscheibe vollkommen geschlossen ist und der Permanentmagnet mittig angeordnet ist, d. h. also zentrisch in der Längsachse der Welle und zentrisch darüber liegend der Impulsgeber, so dass damit eine unmittelbare magnetische Beeinflussung auf den Impulsgeber gegeben ist, ohne dass Nebenfeldlinien in die gegen magnetische Einstrahlungen empfindliche Leiterplatte gehen.

Im Folgenden wird die Erfindung anhand von lediglich einen Ausführungsweg darstellende Zeichnungen näher erläutert. Hierbei gehen aus den Zeichnungen und ihrer Beschreibung weitere Merkmale und Vorteile der Erfindung hervor.

Es zeigen:
- Figur 1:: Schematisiert eine perspektivische Ansicht einer ersten Ausführungsform eines Multiturn-Drehsensors
- Figur 2:: Draufsicht auf die Anordnung nach Figur 1
- Figur 3:: Schnitt durch den Drehsensor nach Figur 1 und 2
- Figur 4:: Perspektivische Ansicht einer zweiten Ausführungsform eines Drehsensors
- Figur 5:: Die Draufsicht auf den Drehsensor nach Figur 4
- Figur 6:: Der Schnitt durch den Drehsensor nach Figur 4 und 5
- Figur 7:: Die perspektivische Ansicht einer dritten Ausführungsform eines Drehsensors
- Figur 8:: Der Schnitt durch die Anordnung unterhalb der Leiterplatte
- Figur 9:: Der Schnitt durch die Anordnung nach Figur 8 und Figur 7

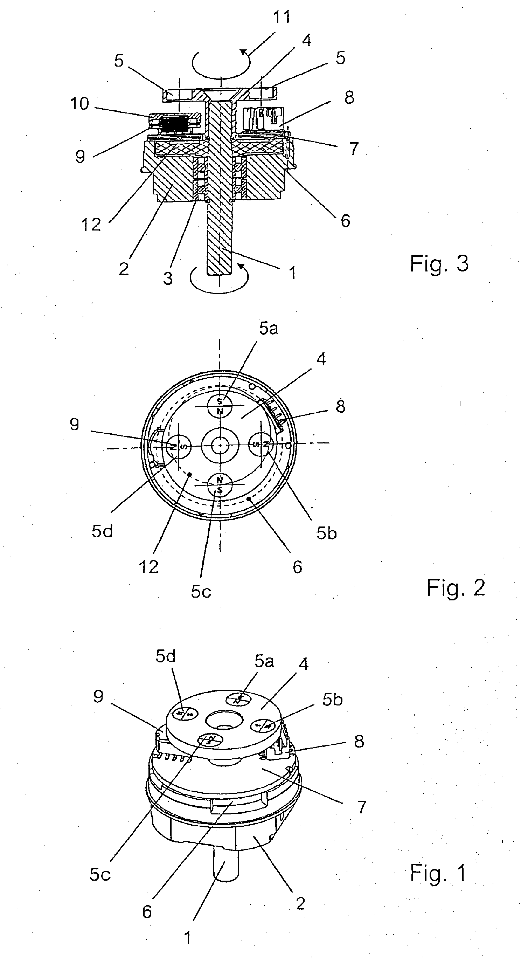

In den Figuren 1 bis 9 ist allgemein eine kapazitiver Drehsensor dargestellt, der mit einer Multiturn-Einrichtung kombiniert ist. Für die gleichen Teile gelten deshalb die gleichen Bezugszeichen.

In Figur 1 ist eine Welle 1 dargestellt, die über ein Lager 3 in einem Gehäuse 2 drehbar gelagert ist und die drehfest an ihrem oberen Ende mit einem Polrad 4 verbunden ist, an dessen Außenumfang eine Anzahl von Magneten 5 fest angeordnet sind.

Die Magnete 5 sind Permanentmagnete und im gezeigten Ausführungsbeispiel sind die Permanentmagnete mit den Bezugszeichen 5a, 5b, 5c und 5d bezeichnet und haben jeweils voneinander abweichende Polaritäten.

Es handelt sich also um die Polmagnete, die jeweils im Bezug auf 90 Grad Drehwinkel gegensätzlich polarisiert sind. Es ist ferner drehfest mit der Welle 1 eine Rotorscheibe 6 verbunden, die aus einem Isolierteil besteht, an dessen einen Seite ein exzentrischer Rotorbelag 12 angeordnet ist, der leitfähig ausgebildet ist.

Diesem exzentrischen Rotorbelag 12 gegenüberliegend ist ein Stator mit einem Statorbelag 14 angeordnet. Beim Vorbeilaufen des exzentrischen Rotorbelages 12 an dem zentrischen Statorbelag 14 entsteht ein elektrostatisches Feld, welches entsprechend der Drehrichtung und Drehgeschwindigkeit modifiziert wird. Damit ist das Messprinzip eines kapazitiven Drehsensors beschrieben und die dazugehörenden elektronischen Auswerteteile sind auf einer Leiterplatte 7 angeordnet, die im Ausführungsbeispiel nach den Figuren 1 bis 3 oberhalb der Rotorscheibe 6 fest in dem Gehäuse 2 des Drehsensors angeordnet ist.

Auf der Leiterplatte 7 ist ein elektrischer Anschluss 8 angeordnet und die entsprechenden Funktionsteile für die elektrische Auswertung des Kapazitätssignals des kapazitiven Drehsensors.

Ferner ist auf der gleichen Leiterplatte ein Impulsgeber 9 angeordnet, der aus einer Induktionsspule besteht, die in einem Gehäuse 10 angeordnet ist.

Beim Vorbeilaufen der gegensätzlich gepolten Magnete 5a - 5d an der Oberseite des Impulsgebers 9 werden in diesem gegensätzlich gerichtete Induktionsspannungen erzeugt, so dass eine Vielfachumdrehung des Polrades 4 an dem Impulsgeber 9 erfasst werden kann. Damit ist das Multiturn-Messprinzip erfüllt.

Hierbei dreht sich beispielsweise die Welle 1 in Pfeilrichtung 11.

Die von dem Impulsgeber 9 erfassten induzierten Impulse werden von einer weiteren Auswerteschaltung erfasst, die ebenfalls auf der Leiterplatte 7 für die Auswertung des kapazitiven Drehsensors ist.

Wichtig bei den Ausführungsbeispielen 1 bis 3 ist die relativ geringe Bauhöhe und vor allem auch die Nachrüstbarkeit eines kapazitiven Drehsensors. Es reicht nämlich aus, auf der Leiterplatte 7 den Impulsgeber 9 anzuordnen und darüber liegend mit Hilfe einer Schraube zentrisch in die Welle 1 das Polrad 4 zu befestigen, an dem die gegensätzlich polarisierten Magnete 5 angeordnet sind. Damit kann jeder herkömmliche kapazitive Drehsensor als Multiturn-Drehsensor nachgerüstet werden.

Es handelt sich also um eine Modulbauweise, so dass auch bei der Herstellung eines solchen kapazitiven Drehsensors einfach eine Multiturn-Anordnung montiert werden kann. Wichtig hierbei ist, dass wenn man eine höher auflösende Multiturn-Auswertung haben möchte, dass man dann das Polrad 4 gegen ein Polrad mit einer größeren Anzahl als 4 Magnete ausrüstet und dabei eine bessere Auflösung des Multiturn-Drehgeberausgangs erhält.

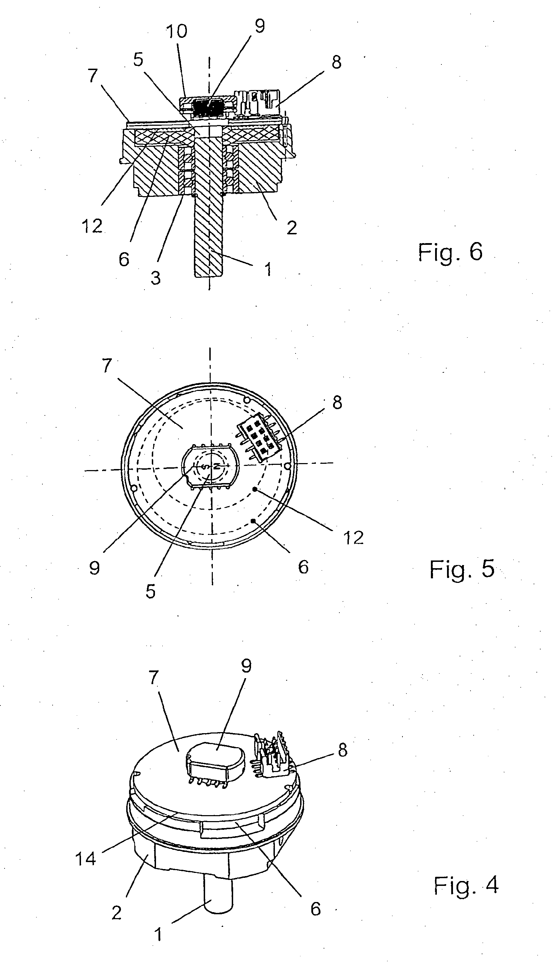

Hierbei sind bereits schon für eine sehr hohe Auflösung 4 Magnete angeordnet, wie es die Figur 2 zeigt. Es reicht jedoch aus, nur einen einzigen Magneten anzuordnen, der in der Lage ist, über den Impulsgeber 9 zu laufen und entsprechende Induktionsspannungen zu induzieren. Dies ist Gegenstand des zweiten Ausführungsbeispiels gem. Figuren 4 bis 6.

Hier wird ein noch verringerter Raumbedarf dadurch erzielt, dass lediglich ein einziger Permanentmagnet 5 zentrisch und drehfest mit der Rotorscheibe 6 verbunden ist, wie dies in Figur 6 dargestellt ist und dieser Permanentmagnet sitzt in einer Aussparung des Rotors, wobei der leitfähige Rotorbelag 12 oberhalb des Magneten 5 angeordnet ist, wie Figur 6 zeigt und darüber fest der Impulsgeber 9 ebenfalls zentrisch befestigt ist.

Der Magnet befindet sich also hinter dem Rotorbelag im Bereich einer Aussparung des exzentrischen Rotorbelages 12, was jedoch nicht lösungsnotwendig ist. Der exzentrische Rotorbelag 12 könnte auch mittig geschlossen sein, d. h. der Magnet befindet sich dahinter und die Magnetfeldlinien gehen durch den exzentrischen Rotorbelag hindurch und wirken auf den auf der gegenüberliegenden Seite angeordneten Impulsgeber 9, ohne dass es zu einer Einstreuung von Magnetlinien in die übrigen elektrischen Funktionsbauteile auf der Leiterplatte 7 kommt. Somit ist wichtig für die Ausführungsbeispiele nach den Figuren 4 bis 9, dass jeweils der Magnet 5 auf der einen Seite des exzentrischen Rotorbelages 12 angeordnet ist, auf dessen gegenüberliegenden Seite die Leiterplatte 7 mit dem Impulsgeber 9 angeordnet ist.

Auf diese Weise wird - wie dargestellt - eine unerwünschte Streumagnetisierung von auf der Leiterplatte angeordneten Funktionsbauteilen vermieden und damit wird eine wesentlich bessere Messgenauigkeit erreicht. Die Kapazitätsmessung für den kapazitiven Drehsensor wird damit in keiner Weise gestört oder beeinträchtigt.

Ein Vorteil des Ausführungsbeispiels nach Figur 4 bis 6 ist, dass der exzentrische Rotorbelag 12, der als dünne Schicht in Figur 6 angedeutet ist, sich nun auch durch die Welle 1 hindurch erstrecken kann und somit eine geschlossene abschirmende Fläche darstellt, die jedoch von Magnetlinien durchdrungen werden kann.

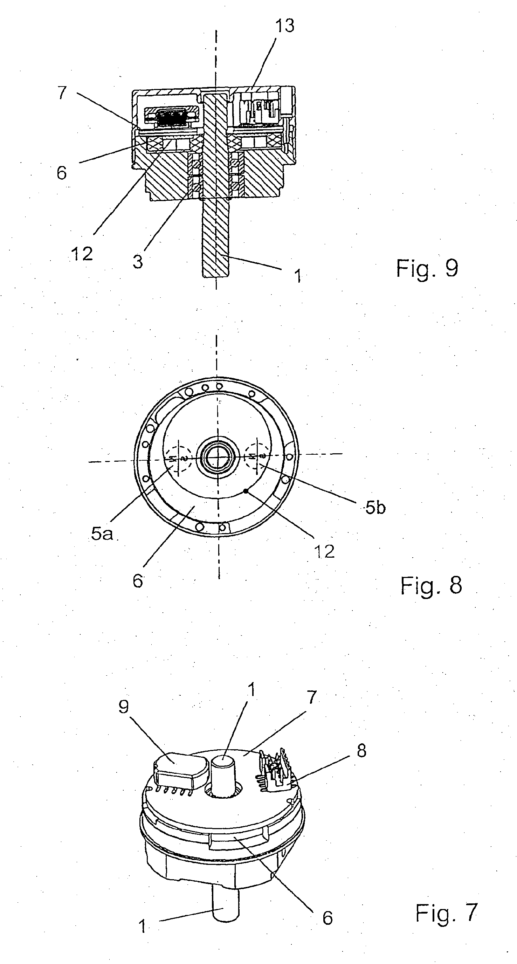

Im Ausführungsbeispiel nach Figur 7 bis 9 wird ebenfalls eine zentrische Anordnung eines Magneten 5 beschrieben, wobei jedoch die Welle 1 sich durch die Rotorscheibe 6 und damit auch durch den exzentrischen Rotorbelag 12 hindurch erstreckt und in einem Gehäusedeckel 13 eingreift.

Bei dieser Ausführungsform ist kennzeichnend, dass der Impulsgeber 9 radial auswärts versetzt auf der Leiterplatte 7 angeordnet ist und damit ist es möglich, die Welle 1 als Hohlwelle auszubilden und eine entsprechende Kopplungsschraube in diese hohle Welle einzuschrauben, um den Drehsensor mit anderen mechanischen Einheiten zu koppeln.

Kennzeichnend ferner für dieses Ausführungsbeispiel ist, dass zwei gegensätzlich polarisierte Magnete 5a, 5b an der Rotorscheibe 6 angeordnet sind, aber in einem Bereich, der von dem exzentrischen Rotorbelag 12 abgeschirmt wird.

D. h., sie sind nicht am Außenumfang der Rotorscheibe 6 angeordnet, sondern radial einwärts versetzt, um so in fluchtende Übereinstimmung mit dem exzentrischen Rotorbelag 12 zu kommen. Damit wird ebenfalls die vorher erwähnte gewünschte Abschirmwirkung nach oben in Richtung auf die darüber angeordnete Leiterplatte 7 erreicht, weil der der exzentrische Rotorbelag 12 zwar durchlässig für Magnetfeldlinien ist, aber ein magnetischer Streufluss auf die anderen Funktionsteile der Leiterplatte 7 vermieden wird.

Das Ausführungsbeispiel nach Figur 7 bis 9 funktioniert auch mit der Anordnung eines einzigen Magneten oder mit der Anordnung von mehr als zwei Magneten.

Statt der Anordnung einer durchgehenden Welle 1, wie es in Figur 7 bis 9 geschildert ist, ist es bei diesem Ausführungsbeispiel auch möglich, die Welle etwa fluchtend mit der Rotorscheibe 6 abzuschließen und nicht als Wellenstumpf durch die Leiterplatte 7 herauszuführen, so dass sich eine ähnliche Anordnung wie in Figur 4 bis 6 ergibt.

Auch bei dieser Ausführungsform ist es dann möglich, den exzentrischen Rotorbelag 12 vollkommen zu schließen, um eine durchgehende Kapazität dieser Fläche zu erreichen.

Der Unterschied, der bei dieser Ausführungsform in Bezug zur Ausführungsform nach Figur 4 bis 6 verbleibt, ist, dass die abgewandelte Ausführungsform nach den Figuren 7 bis 9 lehrt, dass es auch möglich ist, den Impulsgeber 9 radial am Außenumfang der Leiterplatte 7 anzuordnen und die Permanentmagnete 5a, 5b in Abdeckung zu dem exzentrischen Rotorbelag 12 anzuordnen.

Ansonsten ergibt sich bei dieser abgewandelten Ausführungsform auch der Vorteil, dass der exzentrische Rotorbelag 12 durch die Mitte hindurchgehend geschlossen sein kann und eine durchgehende elektrische Fläche ausbildet.

Die Erfindung betrifft also einen kapazitiven Drehsensor mit Muliturn-Funktion, wobei zwischen einem Statorbelag 14 eines Stators und einem exzentrischen Rotorbelag 12 einer Rotorscheibe 6 ein kapazitives Feld erzeugt wird, welches sich bei Drehung der Rotorscheibe 6 mittels einer Welle 1 verändert, wobei die Muliturn-Funktion durch einen Wigand-Sensor erfasst wird, welcher einen Impulsgeber 9 aufweist, in dessen Induktionsspule elektrische Spannungen induziert werden, wenn der mindestens ein Permanentmagnet 5; 5a, 5b, 5c, 5d vorbeiläuft und wobei der Impulsgeber 9 auf einer statorfesten Leiterplatte 7 und der mindestens eine Magnet 5; 5a, 5b, 5c, 5d auf einer mit der Welle 1 drehbaren Scheibe 4; 6 angeordnet ist.

### Zeichnungslegende

- 1: Welle
- 2: Gehäuse des Stators
- 3: Lager
- 4: Polrad
- 5: Magnet
- 6: Rotorscheibe
- 7: Leiterplatte
- 8: Elektrischer Anschluss
- 9: Impulsgeber
- 10: Gehäuse von 9
- 11: Drehrichtung von 1
- 12: Zu 14 exzentrischer Rotorbelag (leitfähig)
- 13: Gehäusedeckel des Stators
- 14: Statorbelag

## Patentansprüche

1. Kapazitiver Drehsensor mit einem Stator (2, 7-10, 13, 14) und einem hierzu mittels Welle (1) über ein Lager (3) in Drehrichtung (11) drehbaren Rotor (4-6, 12) mit Rotorscheibe (6), wobei zwischen einem Statorbelag (14) auf einer statorfesten Leiterplatte (7) und dem hierzu axial gegenüberliegenden exzentrischen Rotorbelag (12) auf der Rotorscheibe (6) ein bei Drehung sich änderndes elektrisches Feld erzeugt wird, **dadurch gekennzeichnet, dass** bei Drehung der Welle (1) eine Muliturn-Funktion durch einen Wigand-Sensor erfasst wird, welcher einen Impulsgeber (9) aufweist, in dessen Induktionsspule unter Relativbewegung zu mindestens einem Permanentmagneten (5; 5a, 5b, 5c, 5d) elektrische Spannungen induziert werden.

2. Kapazitiver Drehsensor nach Anspruch 1, **dadurch gekennzeichnet, dass** der Impulsgeber (9) auf der statorfesten Leiterplatte (7) und der mindestens eine Permanentmagnet (5; 5a, 5b, 5c, 5d) auf einer mit der Welle (1) drehbaren Scheibe (4; 6) angeordnet ist.

3. Kapazitiver Drehsensor nach Anspruch 2, **dadurch gekennzeichnet, dass** die Scheibe (4; 6) ein Polrad (4) ist, welches am freien Ende der Welle (1) angeordnet ist und dass sich der mindestens eine Permanentmagnet (5; 5a, 5b, 5c, 5d) und der Impulsgeber (9) unmittelbar axial gegenüberliegen.

4. Kapazitiver Drehsensor nach Anspruch 3, **dadurch gekennzeichnet, dass** 4 Stück Permanentmagnete (5a, 5b, 5c, 5d) zueinander um 90° versetzt auf dem Polrad (4) angeordnet sind.

5. Kapazitiver Drehsensor nach Anspruch 2, **dadurch gekennzeichnet, dass** die Scheibe (4; 6) die Rotorscheibe (6) ist, und dass zwischen dem mindestens einen Permanentmagneten (5; 5a, 5b, 5c, 5d) und dem Impulsgeber (9) sich die statorfeste Leiterplatte (7) befindet.

6. Kapazitiver Drehsensor nach Anspruch 5, **dadurch gekennzeichnet, dass** zwischen dem mindestens einen Permanentmagneten (5; 5a, 5b, 5c, 5d) und dem Impulsgeber (9) sich der Rotorbelag (12) und/oder der Statorbelag (14) befindet.

7. Kapazitiver Drehsensor nach einem der Ansprüche 4 bis 6, **dadurch gekennzeichnet, dass** ein einziger Permanentmagnet (5) mittig auf der Rotorscheibe (6) angeordnet ist, d. h. also zentrisch in der Längsachse der Welle (1) und zentrisch axial gegenüber liegend der Impulsgeber (9).

8. Kapazitiver Drehsensor nach einem der Ansprüche 4 bis 6, **dadurch gekennzeichnet, dass** zwei Permanentmagnete (5a, 5b) außermittig und zueinander um 180° versetzt auf der Rotorscheibe (6) angeordnet sind.

9. Kapazitiver Drehsensor nach einem der Ansprüche 4 bis 8, **dadurch gekennzeichnet, dass** der mindestens eine Permanentmagnet (5; 5a, 5b, 5c, 5d) in einer Vertiefung der Rotorscheibe (6) integriert angeordnet ist.

## Claims

1. Capacitive rotary sensor with a stator (2, 7-10, 13, 14) and a rotor (4-6, 12), which can be rotated with respect thereto by means of a shaft (1) by a bearing (3) in the rotational direction (11), with a rotor disc (6), wherein an electric field that changes upon rotation is produced between a stator layer (14) on a circuit board (7) fixed to the stator and the eccentric rotor layer (12) axially opposing the latter on the rotor disc (6), **characterised in that** upon a rotation of the shaft (1), a multi-turn function is detected by a Wiegand sensor, which has a pulse generator (9), in the induction coil of which electric voltages are induced with relative movement with respect to at least one permanent magnet (5; 5a, 5b, 5c, 5d).

2. Capacitive rotary sensor according to claim 1, **characterised in that** the pulse generator (9) is arranged on the circuit board (7) fixed to the stator and the at least one permanent magnet (5; 5a, 5b, 5c, 5d) is arranged on a disc (4; 6) that can be rotated with the shaft (1).

3. Capacitive rotary sensor according to claim 2, **characterised in that** the disc (4; 6) is a magnet wheel (4), which is arranged at the free end of the shaft (1) and **in that** the at least one permanent magnet (5; 5a, 5b, 5c, 5d) and the pulse generator (9) directly axially oppose one another.

4. Capacitive rotary sensor according to claim 3, **characterised in that** 4 permanent magnets (5a, 5b, 5c, 5d) are arranged offset by 90° in relation to one another on the magnet wheel (4).

5. Capacitive rotary sensor according to claim 2, **characterised in that** the disc (4; 6) is the rotor disc (6), and **in that** the circuit board (7) fixed to the stator is located between the at least one permanent magnet (5; 5a, 5b, 5c, 5d) and the pulse generator (9).

6. Capacitive rotary sensor according to claim 5, **characterised in that** the rotor layer (12) and/or the stator layer (14) is located between the at least one permanent magnet (5; 5a, 5b, 5c, 5d) and the pulse generator (9).

7. Capacitive rotary sensor according to any one of claims 4 to 6, **characterised in that** a single permanent magnet (5) is arranged centrally on the rotor disc (6), i.e. centrally in the longitudinal axis of the shaft (1) and centrally axially opposing the pulse generator (9).

8. Capacitive rotary sensor according to any one of claims 4 to 6, **characterised in that** two permanent magnets (5a, 5b) are arranged eccentrically and offset by 180° with respect to one another on the rotor disc (6).

9. Capacitive rotary sensor according to any one of claims 4 to 8, **characterised in that** the at least one permanent magnet (5; 5a, 5b, 5c, 5d) is arranged integrated in an indentation of the rotor disc (6).

## Revendications

1. Détecteur de rotation capacitif avec un stator (2, 7-10, 13, 14) et un rotor (4-6) qui est apte à tourner par rapport à celui-ci à l'aide d'un arbre (1), par l'intermédiaire d'un palier (3), dans le sens de rotation (11), et qui est pourvu d'un disque de rotor (6)., étant précisé qu'un champ électrique variable lors de la rotation est produit entre une garniture de stator (14) sur une première carte imprimée (7) solidaire du stator, et la garniture de rotor (12) excentrique qui lui fait face axialement, sur le disque de rotor (6), **caractérisé en ce que** lors de la rotation de l'arbre (1), une fonction multitour est détectée par un détecteur Wiegand qui comporte un générateur d'impulsions (9) dans la bobine d'induction duquel des tensions électriques sont induites moyennant un mouvement relatif par rapport à au moins un aimant permanent (5 ; 5a, 5b, 5c, 5d).

2. Détecteur de rotation capacitif selon la revendication 1, **caractérisé en ce que** le générateur d'impulsions (9) est disposé sur la carte imprimée (7) solidaire du stator, et l'aimant ou les aimants permanents (5 ; 5a, 5b, 5c, 5d) sur un disque (4 ; 6) apte à tourner avec l'arbre (1).

3. Détecteur de rotation capacitif selon la revendication 2, **caractérisé en ce que** le disque (4 ; 6) est une roue polaire (4) qui est disposée à l'extrémité libre de l'arbre (1), et **en ce que** l'aimant ou les aimants permanents (5 ; 5a, 5b, 5c, 5d) et le générateur d'impulsions (9) se font directement face axialement.

4. Détecteur de rotation capacitif selon la revendication 3, **caractérisé en ce que** 4 aimants permanents (5a, 5b, 5c, 5d) sont disposés sur la roue polaire (4) en étant décalés de 90° les uns par rapport aux autres.

5. Détecteur de rotation capacitif selon la revendication 2, **caractérisé en ce que** le disque (4 ; 6) est constitué par le disque de rotor (6), et **en ce que** la carte imprimée (7) solidaire du stator se trouve entre l'aimant ou les aimants permanents (5 ; 5a, 5b, 5c, 5d) et le générateur d'impulsions (9).

6. Détecteur de rotation capacitif selon la revendication 5, **caractérisé en ce que** la garniture de rotor (12) et/ou la garniture de stator (14) se trouvent entre l'aimant ou les aimants permanents (5 ; 5a, 5b, 5c, 5d) et le générateur d'impulsions (9).

7. Détecteur de rotation capacitif selon l'une des revendications 4 à 6, **caractérisé en ce qu'**un seul aimant permanent (5) est disposé au centre du disque de rotor (6), c'est-à-dire de manière centrée, dans l'axe longitudinal de l'arbre (1), et le générateur d'impulsions (9) est disposé de manière centrée, axialement en face.

8. Détecteur de rotation capacitif selon l'une des revendications 4 à 6, **caractérisé en ce que** deux aimants permanents (5a, 5b) sont disposés sur le disque de rotor (6) en étant décentrés et décalés de 180° l'un par rapport à l'autre.

9. Détecteur de rotation capacitif selon l'une des revendications 4 à 8, **caractérisé en ce que** l'aimant ou les aimants permanents (5 ; 5a, 5b, 5c, 5d) sont disposés en étant intégrés dans un creux du disque de rotor (6).
